# EUROPÄISCHE PATENTSCHRIFT

(11) **EP 2 416 145 B1**
(45) Veröffentlichungstag und Bekanntmachung des Hinweises auf die Patenterteilung: **14.11.2012**
(21) Anmeldenummer: 10171905.2
(22) Anmeldetag: 04.08.2010
(51) Int. Cl.: G01N 21/53

(54) **Vorrichtung zur Analyse eines Fluids**
Device for analysing a fluid
Dispositif destiné à l'analyse d'un fluide

(43) Veröffentlichungstag der Anmeldung: 08.02.2012
(73) Patentinhaber: SICK AG, 79183 Waldkirch (DE)
(72) Erfinder: Schiffler, Ingo, 79115, Freiburg (DE)
(74) Vertreter: Ludewigt, Christoph

(56) Entgegenhaltungen:
- EP-A2- 0 318 752
- WO-A2-2009/155459
- US-A- 5 404 228
- Sick Maihak GmbH: "GM35 In-Situ Gas Analyzer", , 2009, XP002615429, Gefunden im Internet: URL:http://www.sick.fi/sickmaihak/product/ categories/gasanalysis/gm35/en.toolboxpar. 0011.file.tmp/PI_GM35_en_8009253.pdf [gefunden am 2010-12-29]

## Beschreibung

Die Erfindung betrifft eine Vorrichtung zur Analyse eines Fluids in einer Leitung oder einem Behälter, mit einer optoelektronischen Vorrichtung zur optischen Analyse.

Bei derartigen Vorrichtungen handelt es sich beispielsweise um optische Spektrometer, Sichtweitenmessgeräte, in-situ Gasanalysatoren und dergleichen. Mit solchen Vorrichtungen werden bestimmte Gasanteile, z.B. Schwefelwasserstoff, Kohlenmonoxid, SO2, NH3, NO NO2, HCl, HF oder dergleichen, mittels optischer Transmission oder Lichtstreuung gemessen. Anwendungsgebiete sind zum Beispiel Emissionsmessungen von Industrieanlagen, bei denen die Abgase auf ihren Gehalt bestimmter molekularer Verbindungen überwacht werden müssen. Deshalb wird zumeist die Konzentration der Gasanteile ermittelt. Bei den meisten optischen Gasmessgeräten muss der Druck und die Temperatur des zu messenden Gases bekannt sein, um die korrekte Konzentration ausrechnen zu können, da die Anzahl der in der Messtrecke befindlichen Moleküle von diesen Parametern abhängt (Gasgesetz). Zusätzlich werden diese Daten bei manchen Auswerteverfahren für die korrekte Funktion der Algorithmen benötigt.

Zur Erfassung von Druck und Temperatur in solchen Anwendungen sind verschiedene Möglichkeiten bekannt.

In einer industriellen Anlage werden häufig an vielen Stellen Druck- und Temperaturwert bereitgestellt. Allerdings werden die Werte zumeist nicht mit ausreichender Genauigkeit ermittelt. Außerdem befinden sich die Messstellen nicht am Ort der Gasanalyse, so dass sich weitere erhebliche Ungenauigkeiten ergeben.

Insbesondere ist es bekannt, zusätzliche Sensoren am Ort der Gasanalyse vorzusehen. Diese zusätzlichen Sensoren verursachen sehr hohe Kosten, von denen nur ein Bruchteil durch die eigentlichen Sensoren verursacht wird, sondern der Hauptteil durch deren Installation, vor allem durch das notwendige Einschweißen von zusätzlichen Flanschen. Das ist weiter nachteilig, denn der Betreiber einer industriellen Anlage ist immer bestrebt, möglichst wenige Zugänge in der Anlage zu haben, denn solche "Löcher" verursachen stets Zusatzkosten.

Weiter ist es bekannt die Messung der Temperatur und/oder des Drucks durch das optische Messverfahren selbst zu ermitteln. Die Ermittlung durch das Messverfahren ist nur in sehr wenigen Fällen und in sehr engen Grenzen möglich, z.B. nur bei sehr hohen Temperaturen. Zudem ist die Genauigkeit oft nicht ausreichend.

Von Geräten der Anmelderin, z.B. dem mit der Bezeichnung GM35, das auch in der Produkt Information "GM35 In-Situ Gas Analyzer" beschrieben ist, ist es bekannt, bei Gasanalysatoren, die nur einen einseitigen Gaskanalzugang benötigen, die also mit einer sogenannten "Messlanze" arbeiten, einen Druck- und Temperatursensor in der Messlanze vorzusehen. Eine solche Integration ist aber dann nicht möglich, wenn der Gasanalysator aus zwei Einheiten besteht, die an der Gasleitung gegenüberliegend angeordnet sind, also bei sogenannten "Cross-Duct°-Geräten. Das Gerät GM35 der Anmelderin sieht für die "Cross-Duct"-Ausführung deshalb eine extra Lanze für die Druck- und Temperaturmessung vor, die an einem separaten Zugang anzuflanschen wäre.

Aus der WO 2009/155459 A2 ist eine Vorrichtung zur Untersuchung von Gasen bekannt, bei der in einem Flansch ringförmig optische Sonden und Temperatur- und Drucksonden angeordnet sind oder bei der in einem Rohr, durch das das Gas strömt, Öffnungen für die Sonden vorgesehen sind.

Die EP 0 318 752 A2 offenbart ebenfalls eine Gasmessvorrichtung mit Temperatur- und Druckfühler ohne dabei Konstruktionsmerkmale anzugeben.

Ausgehend von diesem Stand der Technik ist es Aufgabe der Erfindung, eine verbesserte Vorrichtung zur Analyse eines Fluids bereitzustellen, mit der in einfacher und insbesondere kostengünstiger Weise auch Temperatur und/oder Druck erfassbar sind.

Diese Aufgabe wird gelöst durch eine Vorrichtung mit den Merkmalen des Anspruchs 1.

Die erfindungsgemäße Vorrichtung dient zur Analyse eines Fluids, das in einer Leitung oder einem Behälter vorliegt. Dies kann z.B. ein Gasstrom in einer Gasleitung sein. Die Vorrichtung weist eine optoelektronische Vorrichtung zur optischen Analyse auf. Die optoelektronische Vorrichtung selbst umfasst wenigstens zwei Gehäuseteile mit Gehäuseflanschen, zur Anflanschung der Vorrichtung an eine Wandung der Leitung bzw. des Behälters, so dass die Gehäuseteile sich gegenüberliegen, einen Lichtsender und einen Lichtempfänger, die zwischen sich eine optische Messtrecke innerhalb der Leitung bzw. des Behälters definieren und eine Auswerteeinrichtung. Neben der optoelektronischen Vorrichtung ist ein Temperatursensor zur Erfassung der Fluidtemperatur und/oder ein Drucksensor zur Erfassung des Fluiddrucks vorgesehen. Erfindungsgemäß ist vorgesehen, dass die Fluidtemperatur bzw. der Fluiddruck im Bereich der optischen Messstrecke erfassbar sind, wozu ein Temperatursensor der Temperaturmessvorrichtung über einen Abstandshalter bzw. ein Staudruckrohr der Druckmessvorrichtung innerhalb der Leitung bzw. des Behälters parallel zur optischen Messstrecke verlaufend gehalten ist und der Abstandshalter bzw. das Staudruckrohr an einem Zwischenflansch befestigt ist, der zwischen einem der Gehäuseflansche und der Wandung einfügbar ist.

Die Erfindung macht es möglich, auch bei "Cross-Duct" Geräten in einfacher Weise eine Temperatur- und Druckerfassung vorzusehen, die sehr kostengünstig ist und auch eine Nachrüstung ermöglicht. Es werden keine zusätzlichen "Löcher" und Flansche an der Gasleitung im Bereich der Messstelle benötigt. Damit sind vor allem die Installationskosten erheblich günstiger. Die Optik, mit der die optische Gasanalyse erfolgt, d.h. der optische Strahlengang, wird nicht oder nicht in störender Weise beeinflusst.

Vorteilhafterweise sind Zuleitungen zu einem Temperatursensor und/oder zu einem Drucksensor durch den Zwischenflansch geführt.

Zum Schutz der Zuleitungen können diese vorteilhafterweise im Abstandshalter geführt sein.

Zur Weiterleitung der Temperatur- und Drucksignale aus dem Gaskanal heraus zur Auswerteeinheit ist in Weiterbildung der Erfindung ein Anschlussstecker oder Anschlusskabel an dem Zwischenflansch vorgesehen.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer erfindungsgemäßen Vorrichtung zur Analyse eines Fluids;
- Fig. 2: die Vorrichtung aus Fig. 1 entlang der Linie I-I.

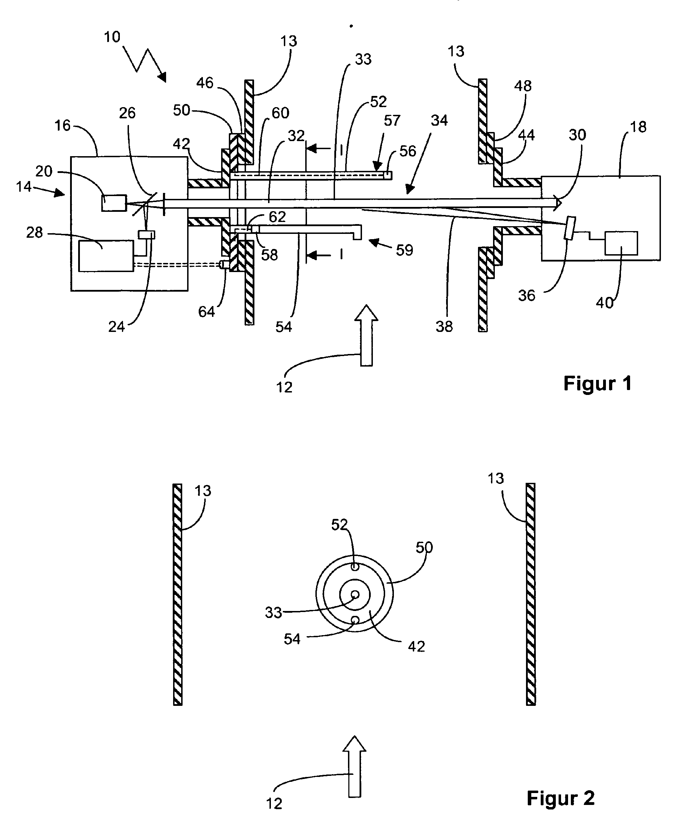

Eine erfindungsgemäße Vorrichtung 10 zur Analyse eines Fluids, beispielsweise eines Gases in einem Gasstrom 12 in einem Kamin 13, weist in einem in Fig. 1 dargestellten Ausführungsbeispiel eine optoelektronische Vorrichtung 14 auf. Diese besteht aus zwei Gehäuseteilen 16 und 18. In dem ersten Gehäuseteil 16 ist ein Lichtsender 20, ein Lichtempfänger 24, ein Teilerspiegel 26 und eine Auswerteeinrichtung 28 angeordnet. In dem zweiten Gehäuseteil 18, der auf der gegenüberliegenden Seite des Kamins 13 angeordnet ist, ist ein Retroreflektor 30 angeordnet. Ein von dem Lichtsender 20 ausgesandter Sendelichtstrahl 32 wird nach Reflektion an dem Retroreflektor 30 und dem Teilerspiegel 26 von dem Lichtempfänger 24 empfangen. Die durch die Lichtstrahlen 32 gebildete optische Messtrecke 33 umfasst ein Messvolumen 34.

Der Lichtempfänger 24 erzeugt in Abhängigkeit des auftreffenden Lichts Empfangssignale, die in der Auswerteeinrichtung 24 ausgewertet werden. In dieser kann die optoelektronische Vorrichtung 14 als Transmissiometer eingesetzt werden, so dass mit dem Lichtempfänger 24 die Intensität des durch das Messvolumen 34 hindurchtretenden Lichts gemessen wird. In der Regel ist der Lichtsender 20 auf eine bestimmte Wellenlänge abgestimmt, die von einem zu untersuchenden Gasanteil, beispielsweise Schwefelwasserstoff, absorbiert wird. Über das am Lichtempfänger 24 empfangene Licht kann dann eine Aussage gemacht werden, wie hoch die Konzentration des interessierenden Gasanteils, z.B. von Schwefelwasserstoff, in dem Gasstrom 12 ist, der in dem Kamin 13 geführt ist.

In diesem Ausführungsbeispiel sind Sender und Empfänger in einem Gehäuseteil und der Reflektor in dem anderen Gehäuseteil angeordnet, so dass das Licht die optische Messstrecke zweimal durchläuft. Das hat den Vorteil, dass elektrische Anschlüsse nur an einem Gehäuseteil notwendig sind. Es wäre aber prinzipiell auch denkbar, dass in dem ersten Gehäuseteil der Sender und in dem zweiten Gehäuseteil der Empfänger angeordnet ist und kein Reflektor vorhanden ist. Dann durchläuft das Licht die Messstrecke nur einmal.

In dem zweiten Gehäuseteil 18 kann alternativ ein zweiter Lichtempfänger 36 angeordnet sein, der so angeordnet ist, dass er beispielsweise Streulicht 38 in Vorwärtsrichtung (Vorwärtsstreuung) empfangen kann, so dass mit der optoelektronischen Vorrichtung 14 auch nach dem Prinzip der Streulichtmessung eine Konzentrationsauswertung von Gasanteilen oder enthaltenen Ruß/Staub vorgenommen werden kann. Das mit dem zweiten Empfänger 36 aufgenommene Streulicht 38 wird dazu in einer zweiten Auswerteeinrichtung 40 ausgewertet. Der beschriebene Streulichtempfänger kann auch in der Sendereinheit 16 integriert sein, um Streulicht in Rückwärtsrichtung zu messen (Rückwärtsstreuung).

Die Gehäuseteile 16 und 18 weisen jeweils einen Gehäuseflansch 42 bzw. 44 auf, mit dem sie an einem an einer Wandung des Kamins 13 angeordneten Anlagenflansch 46 bzw. 48 anflanschbar sind.

Des Weiteren weist die erfindungsgemäße Vorrichtung einen Zwischenflansch 50 auf, der in dem dargestellten Ausführungsbeispiel zwischen dem ersten Gehäuseflansch 42 und dem zugeordneten Anlagenflansch 46 flanschbar ist. Der Zwischenflansch 50 dient als Halter für eine Temperaturmessvorrichtung 57 und eine Druckmessvorrichtung 59. Die Temperaturmessvorrichtung 57 umfasst einen Abstandhalter 52 und einen Temperatursensor 56. Der Abstandshalter 52 hält an seinem freien Ende den Temperatursensor 56 in den Gasstrom 12 hinein, um die Temperatur des Gases zu erfassen.

Die Druckmessvorrichtung 59 umfasst ein Staudruckrohr 54 und einen Drucksensor 58. Über das Staudruckrohr 54 wird der Staudruck erfasst und zur Membran des Drucksensors 58 zugeführt, so dass der Druck des Gases erfasst werden kann. Prinzipiell wären auch andere Ausführungsformen der Druckmessvorrichtung denkbar. So kann der Drucksensor außerhalb des Zwischenflansches montiert sein, um eine Temperaturbeständigkeit zu erreichen und nur das Staudruckrohr ragt in den Kanal hinein. Der Drucksensor kann aber auch so ausgebildet sein, dass nur die Druckmessmembran im Gaskanal liegt und der Druck über ein Übertragungsmedium, z.B. Öl, an den außen liegenden Drucksensor weitergeleitet wird. Es wäre auch denkbar den Drucksensor direkt am freien Ende des Staudruckrohres 54 anzuordnen, wenn die Größe des Drucksensors und seine Beständigkeit gegenüber den Bedingungen im Gaskanal diese Anordnung zulassen. Das Staudruckrohr würde dann nicht mehr für den Staudruck dienen, sondern als zweite Halterung.

Temperatur und Druck sollen möglichst nahe an der Messstrecke erfasst werden, damit die Werte den Werten aus der optischen Messung entsprechen und eine gemeinsame Auswertung möglich ist. Deshalb sind der Abstandshalter 52 und das Staudruckrohr 54 im Wesentlichen parallel zur optischen Messstrecke 33 ausgerichtet und ihre freien Enden liegen im Bereich der optischen Messstrecke 33.

Der Temperatur- und der Drucksensor 56 bzw. 58 sind über Zuleitungen 60 und 62, die im Abstandshalter 52 bzw. im Rohr 54 verlaufen, durch den Zwischenflansch geführt und letztlich mit der Auswerteeinrichtung 28 oder einer separaten, nicht extra dargestellten Auswertevorrichtung verbunden. Außen an dem Zwischenflansch 50 kann ein Anschlussstecker 64 für die entsprechende Verbindung zur Auswerteeinrichtung vorgesehen sein.

In Fig. 2 ist eine Draufsicht von innen auf die Flansche in Richtung auf das erste Gehäuseteil 16 dargestellt. In diesem Ausführungsbeispiel liegen die Druckmessvorrichtung 59 in Strömungsrichtung vor der optischen Messstrecke 33 und die Temperaturmessvorrichtung 57 in Strömungsrichtung hinter der optischen Messtrecke 33. In einer solchen Anordnung könnte die Gasströmung am Ort der optischen Messstrecke 33 gestört sein. Deshalb kann es vorteilhaft sein, den Zwischenflansch 50 mit den daran befestigten Abstandshaltern 52 und Staudruckrohr 54, die in diesem Ausführungsbeispiel diametral am Zwischenflansch 50 angeordnet sind, um beispielsweise 90° zu drehen. Dann lägen Temperatur- und Druckmessvorrichtung in Strömungsrichtung gesehen neben der optischen Messtrecke und würden eine geringere Störung der Gasströmung am Ort der optischen Messstrecke bewirken.

## Patentansprüche

1. Vorrichtung zur Analyse eines Fluids in einer Leitung (13) oder einem Behälter, aufweisend eine optoelektronische Vorrichtung (14) zur optischen Analyse mit:
- wenigstens zwei Gehäuseteilen (16, 18) mit Gehäuseflanschen (42, 44), zur Anflanschung an eine Wandung der Leitung (13) bzw. des Behälters, so dass die Gehäuseteile sich gegenüberliegen,
- einem Lichtsender (20) und einem Lichtempfänger (24), die zwischen sich eine optische Messtrecke (33) innerhalb der Leitung (13) bzw. des Behälters definieren,
- und einer Auswerteeinrichtung (28),
weiter aufweisend eine Temperaturmessvorrichtung (57) und/oder eine Druckmessvorrichtung (59), **dadurch gekennzeichnet, dass** die Temperaturmessvorrichtung (57) einem Temperatursensor (56) und einen Abstandshalter (52) aufweist und/oder die Druckmessvorrichtung (59) ein Staudruckrohr (54) aufweist, dass die Vorrichtung einen Zwischenfland (50) aufweist und dass zur Erfassung von Fluidtemperatur bzw. Fluiddruck im Bereich der optischen Messstrecke (33) der Temperatursensor (56) der Temperaturmessvorrichtung (57) über den Abstandshalter (52) bzw. das Staudruckrohr (54) der Druckmessvorrichtung (59) innerhalb der Leitung (13) bzw. des Behälters parallel zur optischen Messstrecke (33) verlaufend gehalten ist und der Abstandshalter (52) bzw. das Staudruckrohr (54) an dem Zwischenflansch (50) befestigt ist, der zwischen einem der Gehäuseflansche (42 bzw. 44) und der Wandung einfügbar ist.

2. Vorrichtung nach Anspruch 1, **dadurch gekennzeichnet, dass** Zuleitungen (60, 62) zu einem Temperatursensor (56) der Temperaturmessvorrichtung (57) bzw. zu einem Drucksensor (58) der Druckmessvorrichtung (59) durch den Zwischenflansch (50) geführt sind.

3. Vorrichtung nach Anspruch 2, **dadurch gekennzeichnet, dass** die Zuleitungen (60) zum Temperatursensor (56) in den Abstandshalter (52) geführt sind.

4. Vorrichtung nach Anspruch 2 oder 3, **dadurch gekennzeichnet, dass** der Zwischenflansch (50) Anschlussstecker (64) zur Verbindung der Zuleitungen (60, 62) mit der Auswerteeinheit (28) aufweist.

## Claims

1. Device for analyzing a fluid in a conduit (13) or a container, comprising an optoelectronic device (14) for the optical analysis with:
- at least two housing parts (16, 18) with flanges (42, 44) for flange-mounting at a wall of the conduit (13) or of the container, so that the housing parts lie opposite to each other,
- a light transmitter (20) and a light receiver (24), which define an optical measurement section (33) between them within the conduit (13) or the container,
- and an evaluation unit (28),
further comprising a temperature measuring device (57) and/or a pressure measuring device (59), **characterized in that** the temperature measuring device (57) comprises a temperature sensor (56) and a spacer (52) and/or the pressure measuring device (59) comprises a dynamic pressure tube (54), **in that** the device comprises an intermediate flange (50) and **in that** the temperature sensor (56) of the temperature measuring device (57) is mounted via the spacer (52) or the dynamic pressure tube (54) of the pressure measuring device (59) within the conduit (13) or of the container while running parallel to the optical measuring section (33) for detection of the fluid temperature or fluid pressure in the area of the optical measuring section (33) and the spacer (52) or the dynamic pressure tube (54) is fastened on the intermediate flange (50), which is insertable between one of the housing flanges (42 or 44) and the wall.

2. Device according to claim 1, **characterized in that** supply lines (60, 62) are guided through the intermediate flange (50) to a temperature sensor (56) of the temperature measuring device (57) or to a pressure sensor (58) of the pressure measuring device (59).

3. Device according to claim 2, **characterized in that** the supply lines (60) for the temperature sensor (56) are guided in the spacer (52).

4. Device according to claim 2 or 3, **characterized in that** the intermediate flange (50) comprises connecting plugs (64) for connection of the supply lines (60, 62) with the evaluation unit (28).

## Revendications

1. Dispositif destiné à analyser un fluide dans un conduit (13) ou un récipient, comprenant un dispositif optoélectronique (14) pour l'analyse optique avec:
- au moins deux parties de boîtier (16, 18) avec des brides (42, 44) pour montage à une paroi du conduit (13) respectivement du récipient, de sorte que les parties de boîtier se trouvent vis-à-vis,
- un émetteur de lumière (20) et un récepteur de lumière (24), qui définissent entre eux une section de mesure optique (33) dans le conduit (13) respectivement le récipient,
- et une unité d'évaluation (28),
comprenant en outre un dispositif de mesure de température (57) et/ou un dispositif de mesure de pression (59), **caractérisé en ce que** le dispositif de mesure de température (57) comprend un capteur de température (56) et une entretoise (52) et/ou le dispositif de mesure de pression (59) comprend un tube de pression dynamique (54), **en ce que** le dispositif comprend une bride intermédiaire (50) et **en ce que** le capteur de température (56) du dispositif de mesure de température (57) est monté par l'entretoise (52) respectivement le tube de pression dynamique (54) du dispositif de mesure de pression (59) dans la conduite (13) respectivement le récipient qui s'étend parallèlement à la section de mesure optique (33) pour la détection de la température du fluide respectivement la pression de fluide dans la zone de section de mesure optique (33) et l'entretoise (52) respectivement le tube de pression dynamique (54) est fixée sur la bride intermédiaire (50), qui peut être insérée entre l'une des brides (42 ou 44) et la paroi.

2. Dispositif selon la revendication 1, **caractérisé en ce que** des lignes d'alimentation (60, 62) sont guidées à travers de la bride intermédiaire (50) à un capteur de température (56) du dispositif de mesure de température (57) respectivement un capteur de pression (58) de la dispositif de mesure de pression (59).

3. Dispositif selon la revendication 2, **caractérisé en ce que** les lignes d'alimentation (60) pour le capteur de température (56) sont guidées dans l'entretoise (52).

4. Dispositif selon la revendication 2 ou 3, **caractérisé en ce que** la bride intermédiaire (50) comprend des fiches de connexion (64) pour la connexion des lignes d'alimentation (60, 62) avec l'unité d'évaluation (28).
